# FASCICULE DE BREVET EUROPEEN

(11) **EP 0 873 689 B1**
(45) Date de publication et mention de la délivrance du brevet: **02.01.2003**
(21) Numéro de dépôt: 98870079.5
(22) Date de dépôt: 14.04.1998
(51) Int. Cl.: A22C 13/00, A22C 17/14

(54) **Procédé pour la préparation de boyaux destinés à la charcuterie et dispositif pour sa mise en oeuvre**
Verfahren und Vorrichtung für die Vorbereitung von Därmen in einer Metzgerei
Method and device for preparing casings in butchery

(30) Priorité: 15.04.1997 EP 97870050
(43) Date de publication de la demande: 28.10.1998
(73) Titulaire: Houti, Mohamed, 6061 Montignies-sur-Sambre (BE)
(72) Inventeur: Houti, Mohamed, 6061 Montignies-sur-Sambre (BE)
(74) Mandataire: Van Malderen, Joelle

(56) Documents cités:
- WO-A-90/13226
- CH-A- 407 794
- FR-A- 2 462 871
- FR-A- 2 683 978
- FR-A- 2 687 546
- GB-A- 751 514
- US-A- 3 826 853
- US-A- 4 713 135

## Description

### Objet de l'invention

La présente invention a pour objet un procédé pour la préparation de boyaux naturels pour la charcuterie, ainsi que les éléments utilisés pour la mise en oeuvre de ce procédé.

### Arrière-plan technologique et état de la technique à la base de l'invention

Les enveloppes naturelles de saucisses sont préparées à partir d'intestins d'animaux qui sont des tubes extrêmement minces, fragiles et pliables constitués de fibres animales, préservés en masse salée ou en saumure. Ils doivent résister au transport avant d'être utilisés par le boucher et d'être enfilés sur une canule d'embossage pour la préparation de saucisses. Lesdits boyaux sont généralement livrés au boucher préassemblés sur des gaines souples ou dès tubes rigides avant leur transfert sur la canule d'embossage.

La demande de brevet FR-1 320 867 décrit un tube creux sur lequel sont disposées une ou plusieurs gaines sur lesquelles sont ensuite enfilés les boyaux par des moyens d'entraînement mécaniques.

La demande de brevet FR-2 539 959 décrit un conduit dans lequel est introduit à une de ses extrémités une gaine formant protubérance à l'extrémité du conduit. On enfile ensuite par la même extrémité sur ledit conduit le boyau, qui sera transféré sur la gaine par retrait de celle-ci en tirant sur l'extrémité faisant saillie du conduit.

La demande de brevet GB-751514 décrit un conduit dans lequel est introduite une gaine préalablement enroulée sur une bobine. On enfile ensuite sur le conduit le boyau, qui est transféré sur la gaine en tirant sur l'extrémité faisant saillie du conduit. Ce document décrit également des moyens d'entraînement (roulettes à palettes) du boyau sur la surface extérieure du conduit. Cependant, un tel dispositif n'est pas adéquat pour un traitement en continu, car le lubrifiant se trouvant dans le conduit s'écoulera par gravité par l'ouverture pratiquée sous le conduit et par laquelle la gaine doit être introduite. En outre, l'introduction de la gaine s'effectue de manière perpendiculaire à l'axe du conduit, ce qui occasionnera des déchirures de la gaine lors de son introduction.

Différents types de supports plastiques pour boyau ont été proposés. Celui-ci peut consister en une gaine souple en polyéthylène qui possède un prédécoupage longitudinal permettant de retirer la gaine plus aisément lors du positionnement du boyau sur la canule. Cependant, les gaines souples proposées présentent le risque d'abîmer le boyau lors du retrait de la gaine.

La demande de brevet FR-2 683 978 décrit une gaine constituée de une ou plusieurs bandes souples de forme généralement oblongue, dont les deux côtés opposés longitudinaux sont rectilignes, et présentent chacune une nervure, une saillie ou une rainure creuse, éléments mâles et femelles complémentaires d'une fermeture longitudinale par pression susceptible d'être ouverte et fermée plusieurs fois.

Néanmoins, une telle gaine particulièrement complexe peut présenter des défauts de fabrication, et est d'un coût élevé.

Dans la demande de brevet FR-2 687 546, on décrit un moyen support faisant office de gaine en matière plastique rigide mais déformable, ouverte à ses deux extrémités par une languette, et présentant une vue en coupe de "haricot" (plate et légèrement creusée), tout en présentant sur une de ses extrémités une fente longitudinale. Une telle gaine présente l'inconvénient qu'elle doit être introduite pièce par pièce sur un tube support pour permettre ensuite l'enfilage des boyaux.

L'inconvénient majeur des dispositifs, gaines et procédés de l'état de la technique est la complexité de leur mise en oeuvre, qui amène une énorme perte de temps et empêche toute automatisation de ces différentes opérations longues, fastidieuses et coûteuses.

### Buts de l'invention

Le but de la présente invention est de fournir un nouveau procédé et dispositif pour la pose rapide de boyaux sur des moyens support ainsi qu'un nouveau moyen support qui ne présenteraient pas les inconvénients de l'état de la technique.

Un autre but de la présente invention est de fournir un procédé, un dispositif et des éléments pour la mise en oeuvre de ce procédé qui permettent l'automatisation de l'enfilage de boyaux sur des moyens support, adaptables en fonction de tout type de boyau ou de moyen support et permettant avantageusement de quantifier la quantité de boyau enfilée sur le moyen support, tout en réduisant les dommages susceptibles d'affecter les boyaux.

### Eléments caractéristiques de l'invention

La présente invention concerne un procédé d'enfilage d'un boyau sur un moyen support faisant office de gaine pour le boyau, ledit procédé comprenant les étapes suivantes :
- le boyau est enfilé sur une première extrémité d'un conduit ou tube creux dans lequel a été introduit le moyen support par l'extrémité opposée à ladite première extrémité du tube creux,
- tout en retirant ledit moyen support par la première extrémité du tube creux (par laquelle a été enfilé ledit boyau), on transfère le boyau sur le moyen support et
- on recueille le moyen support sur lequel est transféré le boyau.

Selon l'invention, l'introduction du moyen support faisant office de gaine dans le tube creux s'effectue essentiellement dans l'axe dudit tube creux, de manière à ne pas provoquer un quelconque déchirement du moyen support faisant office de gaine lors de son introduction ou lors de son passage dans ledit tube creux.

Selon l'invention, on entend par "enfilage du boyau sur le tube creux" le glissement du boyau sur la surface extérieure du tube creux.

On entend par "introduction du moyen support faisant office de gaine dans l'axe du tube creux", le fait que le plan de la surface essentiellement plane du moyen support (gaine) préalablement à son introduction présente moins de 10 degrés, de préférence moins de 5 degrés, de pente par rapport à l'axe du tube creux, tel que cela est représenté dans les figures annexées.

Cette faible inclinaison du moyen support par rapport à l'axe du tube creux lors de son introduction permet avantageusement d'éviter des problèmes d'écoulement de lubrifiants et facilite son déplacement à l'intérieur du tube creux sans provoquer de déchirures.

La seconde étape de ce procédé assure le transfert aisé du boyau enfilé sur le tube creux, vers le moyen support sans occasionner des dommages au boyau ou des pertes de temps. Cette opération de transfert est également dénommée ci-après "enfilage du boyau sur le moyen support".

Un tel procédé permet une automatisation de l'enfilage du boyau sur le tube creux, et l'introduction dans ledit tube creux du moyen support par une extrémité opposée à la première extrémité sur laquelle est enfilée ledit boyau, permet d'accélérer le procédé de production et assure un meilleur contrôle de qualité des produits obtenus.

Les différentes étapes de ce procédé peuvent être automatisées (par différents moyens mécaniques assurant les opérations de ces différentes étapes) ou être effectuées de manière manuelle.

Il est également possible d'incorporer avant, pendant ou après les principales étapes susmentionnées un ou plusieurs traitements de mesurage, de découpage, de marquage, de lubrification, de collage, de calibrage, etc. du boyau et/ou du moyen support.

Avantageusement, le moyen support est introduit en une seule fois dans le tube creux au cours du procédé en utilisant un seul moyen support, de préférence prédécoupé, qu'il suffira de détacher en différents tronçons avant de le retirer du tube creux et d'assurer le transfert du boyau sur ceux-ci.

La présente invention concerne également un dispositif tel que décrit dans la revendication 3.

Le tube creux est en acier inoxydable traité et poli sur ses deux faces intérieure et extérieure afin de faciliter la glisse et "l'enfilage du boyau" et la glisse et la pénétration dans sa cavité intérieure du moyen support.

La première extrémité du tube creux présente une section de forme aplatie, de préférence avec une découpe en forme de "U" évasé sur sa face inférieure, de manière à faciliter la pose et l'enfilage du boyau.

Cette première extrémité du tube creux peut comporter une pièce de protection ayant la forme d'une buse essentiellement conique, dans laquelle une ouverture pour le passage d'un lubrifiant, de préférence liquide tel que de l'eau, a été pratiquée, cette forme facilitant "l'enfilage du boyau" sur le tube creux.

Ledit tube creux comporte également à l'extrémité opposée une ouverture de forme divergente (ou évasée), de préférence de forme conique ou pyramidale, de manière à faciliter l'introduction et/ou le pliage du moyen support lors de son introduction dans ledit tube creux.

Avantageusement, le tube creux comporte également un dispositif d'alimentation en lubrifiant, permettant de maintenir constamment un filet de lubrifiant à l'intérieur du tube creux.

En outre, le tube creux comporte également un guide soudé dans ladite ouverture permettant de faciliter l'introduction et/ou le pliage du moyen support dans ledit tube creux et permettant que le lubrifiant s'écoule par une ouverture pratiquée dans ledit tube creux sans que celle-ci soit obstruée par le moyen support introduit.

Le dispositif selon la présente invention comporte également des moyens d'entraînement permettant l'enfilage aisé du boyau sur le tube creux et sur le moyen support, et éventuellement des moyens d'entraînement du moyen support dans le tube creux.

Ces moyens d'entraînement peuvent consister en une ou plusieurs roues à palettes ou à chenilles. L'avantage d'un système d'entraînement à chenilles est que celui-ci assure une large surface de contact entre le système d'entraînement et le boyau, tout en réduisant les dommages éventuels occasionnés sur la surface du boyau lors de l'étape d'enfilage.

Le dispositif selon la présente invention comporte également différents moyens de lecture de la quantité (longueur) de boyau et de moyen support utilisée, permettant de définir les longueurs de boyaux préparées, la quantification des pertes, etc.

Selon l'invention, le moyen support est réalisé en une matière plastique prédécoupée et éventuellement enroulé sur une bobine de manière à réduire l'encombrement. Un moyen support prédécoupé fixé sur une bobine garantit son introduction en continu dans le tube creux et facilite l'automatisation du procédé.

Selon une forme d'exécution préférée de l'invention, le moyen support est prétraité dans un bac de lubrification et entraîné par des galets préalablement à son introduction selon la bonne orientation dans le tube creux.

Le moyen support est de préférence réalisé en matière plastique (PE), prédécoupé en tronçons comportant une prédécoupe en forme de demi-lune, ce qui permet avantageusement de distinguer l'extrémité antérieure et postérieure dudit moyen support.

Une prédécoupe de manière à former des tronçons aux extrémités en forme de demi-lune permet de séparer aisément ces différents tronçons par simple traction manuelle.

Avantageusement, le moyen support est une gaine en matière plastique ayant une forme multi-plissée de type "accordéon", c'est-à-dire ayant la forme d'une surface recourbée (pliée) en deux sur elle-même, ladite surface présentant une ondulation parallèle à l'axe de ladite courbure (pliure) qui est une succession de plus de deux creux et deux sommets d'une sinusoïde d'amplitude et de fréquence essentiellement constantes.

Ledit moyen support présente une surface légèrement bombée et une ouverture sur toute sa longueur, ladite ouverture étant parallèle à l'axe de la courbure (pliure) de la surface.

Ledit moyen support peut également être une gaine plate, de préférence prédécoupée en différents tronçons comportant une prédécoupe en forme de demi-lune, tel que décrit ci-dessus, de manière à obtenir des tronçons possédant une extrémité concave et une extrémité convexe.

La forme du moyen support faisant office de gaine, en particulier la forme multi-plissée de type accordéon, permet une adaptation avantageuse à différents calibres de boyaux, et assure par une irrigation idéale du boyau sa conservation optimale.

En outre, ledit moyen peut être encore replié sur lui-même en deux (en forme de "V") ou en trois (en forme de "Z") avant son introduction dans ledit tube creux.

La présente invention sera décrite plus en détails en référence à une forme d'exécution préférée de l'invention décrite ci-dessous à l'aide des figures annexées.

### Brève description des figures

- La figure 1: représente de manière schématique le dispositif selon la présente invention.
- Les figures 2 à 4: représentent des vues schématiques en coupe d'une des extrémités du tube creux du dispositif selon l'invention.
- Les figures 5 et 6: représentent des vues schématiques de l'autre extrémité du tube creux du dispositif selon la présente invention sur laquelle est éventuellement emboîtée une buse de forme conique.
- La figure 7: représente l'étape manuelle d'enfilage du boyau sur le tube creux dans le dispositif selon la présente invention.
- Les figures 8 et 9: représentent l'étape manuelle de transfert du boyau sur le moyen support selon l'invention.
- La figure 10: représente une vue schématique du moyen support prédécoupé en forme de demi-lune.
- La figure 11: représente une vue schématique du moyen support selon l'invention.
- La figure 12: représente une vue schématique du dispositif de préparation du moyen support selon l'invention.

### Description d'une forme d'exécution préférée de l'invention

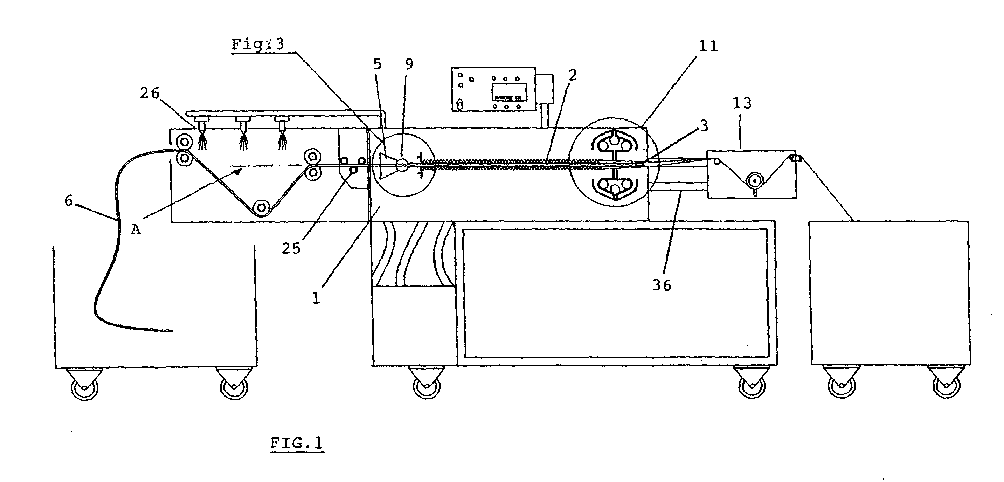

Le dispositif, représenté de manière schématique sur la figure 1 annexée, comprend, fixé à un châssis 1, un tube creux 2 dont une première extrémité 3 est adaptée pour l'enfilage de boyaux et dont l'autre extrémité 5 est adaptée pour l'introduction d'un moyen support 6 faisant office de gaine.

La fixation du tube creux 2 sur le châssis 1 du dispositif de l'invention se fait via une pièce filetée 9 fixée sur le châssis 1, le déplacement du tube 2 par rapport au châssis 1 pouvant être limité de manière avantageuse par un dispositif 25 (tel qu'un ressort) reliant la pièce filetée 9 au châssis 1 ou à une pièce métallique 26 soudée sur le châssis 1.

Les deux positions du tube creux sont déterminées par l'utilisateur en fonction de l'opération effectuée (enfilage de l'extrémité du boyau sur le tube creux, déplacement du boyau et formation des plis, transfert du boyau sur le moyen support, position arrêt de la machine, etc.).

De manière avantageuse, la pièce filetée 9 est reliée à un dispositif de lubrification 14 qui permet passage de lubrifiant dans la pièce filetée 9 et son écoulement par une ouverture 16 du tube creux 2.

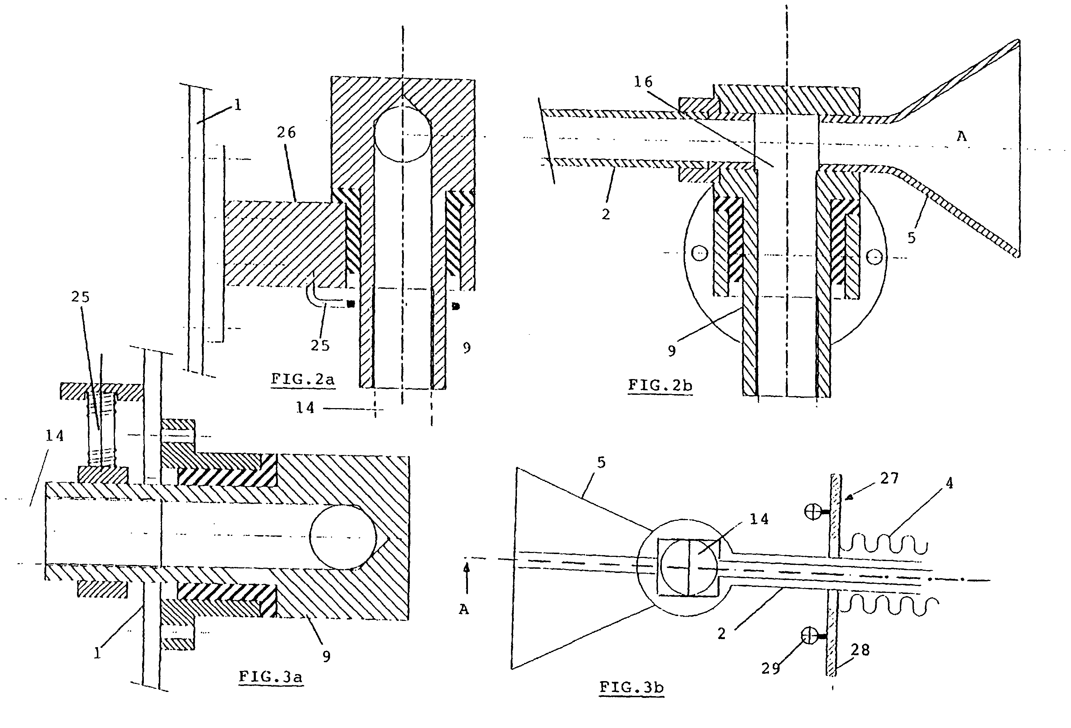

Les figures 2 et 3 représentent deux formes d'exécution différentes du mode de fixation de la pièce filetée 9 sur le châssis 1. Ce type de fixation permet avantageusement le changement rapide de tubes creux de différents diamètres adaptés selon le type de boyau ou de moyen support utilisé.

Le dispositif avec une découpe en forme de "U" (figure 5a) évasée sur la face inférieure 33 de la première extrémité 3 du tube creux 2 comporte les avantages suivants :
- l'ouverture en forme de "U" permet à l'opérateur un retrait facile du moyen support 6 lors de l'opération de transfert du boyau 4 sur le moyen support 6,
- la visibilité de l'extrémité du moyen support 6 dans une bonne position dans le tube creux est assurée via une sonde, par détection visuelle ou par un capteur,
- le moyen support 6 est maintenu au niveau de la découpe en forme de "U" sans former de protubérance à l'extrémité du conduit, et ne peut endommager les boyaux.

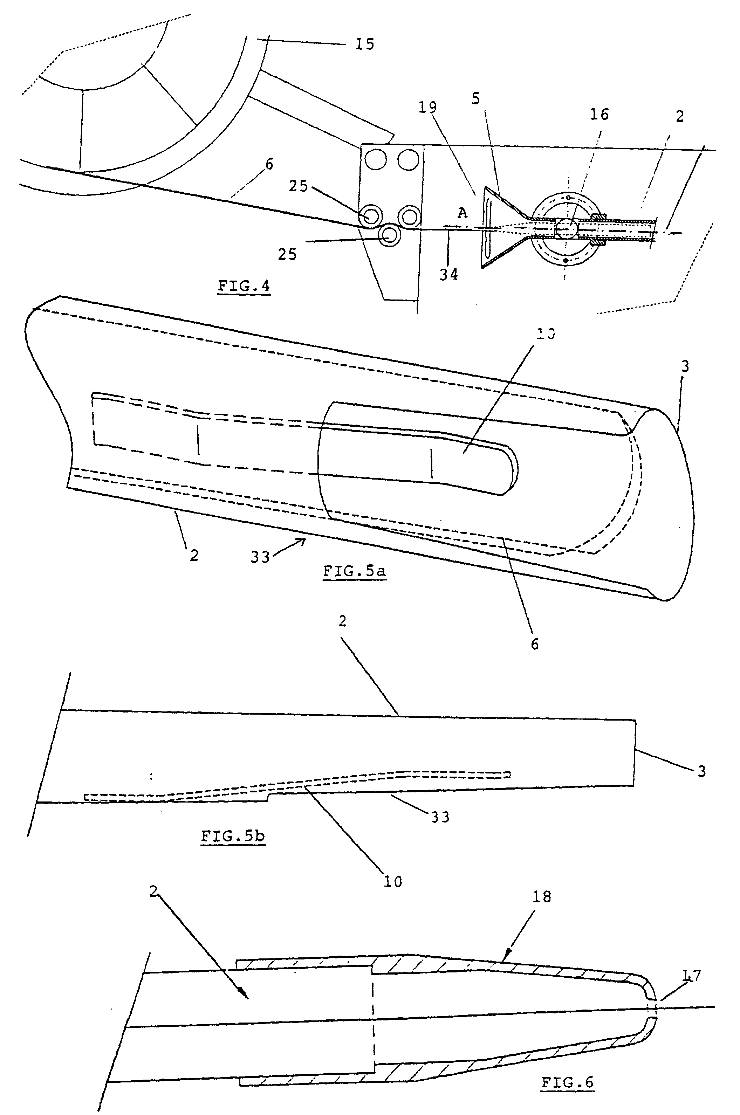

En outre, un moyen de fixation et/ou de découpe du moyen support 6, par exemple constitué par une lame ressort 10, apparente au niveau de la découpe en forme de "U", permet par une légère pression sur le moyen support 6 son découpage (voir figures 5a et 5b).

Le dispositif selon l'invention comprend également des moyens de mesure de la quantité de boyau et/ou de moyen support utilisée dans le dispositif de l'invention. Celui-ci peut, par exemple, être un métreur 13 constitué d'un ensemble roue, guides et frein permettant de mesurer les quantités de boyau enfilées. La commande s'effectue via un compteur électronique programmable en fonction des longueurs désirées par le client. Il permet ur comptage journalier des entrées et sorties de la marchandise de chaque poste de travail et assure ainsi une quantification des pertes.

Le dispositif de lubrification 14 comprend ur système d'alimentation en lubrifiant (eau) permettant de maintenir un filet de lubrifiant constant à l'intérieur du tube creux qui facilite l'introduction et le passage du moyen support 6 à l'intérieur de celui-ci. Le lubrifiant s'écoule à partir d'une ouverture 16 pratiquée dans le tube creux 2 au niveau de l'extrémité 5 par laquelle est introduit le moyen support 6 et le lubrifiant s'écoule depuis cette ouverture à l'intérieur du tube creux par la première extrémité 3 sur laquelle est enfilée le boyau 4 ou l'ouverture 17 de la buse de protection 18 disposée sur cette extrémité (figure 6).

L'autre extrémité 5 du tube creux 2 comporte de préférence une ouverture évasée de forme conique qui facilite l'introduction du moyen support (figure 4).

En outre, le moyen support est une gaine plate, guidée vers cette ouverture de forme conique dans l'axe dudit tube creux, de manière à faciliter l'introduction de ladite gaine dans le tube creux. Comme il apparaît à la figure 4, ladite gaine essentiellement plate 6 est introduite dans l'axe A du tube creux 2. La gaine est entraînée par des galets 25 de manière à ce que la surface 34 de la gaine 6 forme lors de son introduction, un angle inférieur à 10 degrés, de préférence inférieur à 5 degrés, par rapport à l'axe A du tube creux 2.

Le tube creux 2 comporte également un guide 19 constitué par une tige soudée disposée dans l'ouverture de l'extrémité 5 du tube creux 2. Ce guide 19 facilite l'introduction et le pliage du moyen support 6 dans le tube creux 2, empêche l'obstruction par le moyen support 6 de l'ouverture 16 et assure ainsi l'écoulement du lubrifiant dans le tube creux 2 et une glisse parfaite du moyen support 6.

De manière à réduire l'encombrement du dispositif de l'invention, le moyen support 6 peut être disposé de manière pré-enroulée sur une bobine 15.

Préalablement à son introduction dans le tube creux, le moyen support faisant office de gaine peut subir un traitement de lubrification dans un bac de lubrification séparé 26.

D'autre part, le dispositif de l'invention comporte des moyens de lubrification des surfaces intérieure et extérieure du tube creux, en particulier par un liquide oléagineux ou non facilitant la glisse du boyau sur la surface extérieure du tube creux.

Le dispositif de l'invention peut comprendre également un bac amovible en inox muni d'un capteur de niveau, à l'intérieur duquel le lubrifiant est aspiré par une pompe et introduit à l'intérieur du boyau préalablement à l'enfilage de celui-ci sur le tube creux.

Le dispositif de l'invention comprend également des moyens d'entraînement 11 et 27 assurant l'enfilage du boyau. Ces moyens peuvent consister en une ou plusieurs roues 11 à palettes 12 ou à chenilles pouvant être montées directement sur un arbre moteur. Un dispositif d'entraînement à chenilles 11 offrant une grande surface de contact présente l'avantage de ne pas occasionner de dégâts au boyau lors de l'enfilage. Le dispositif de l'invention comprend également un moyen d'entraînement 27 (facilitant le déplacement du boyau 4 enfilé sur le tube creux 2 et son transfert sur le moyen support 6), consistant en une rondelle en plastique 28 encerclant le tube creux 2 et maintenue par une fourche 29 mobile selon la même orientation que l'axe A du tube creux 2. Lesdits moyens d'entraînement peuvent être conçus de manière à être entraînés par le même moteur ou par des moteurs différents, travaillant éventuellement pour différents postes de travail montés sur le même châssis.

Le dispositif de l'invention peut également être conçu de manière à ce que les différents mouvements effectués sur le dispositif soient assurés de manière coordonnée. Un dispositif mécanique automatisé assurant les mouvements coordonnés des moyens d'entraînement 11 et 27 permet un chevauchement régulier des plis lors de l'enfilage sur la gaine.

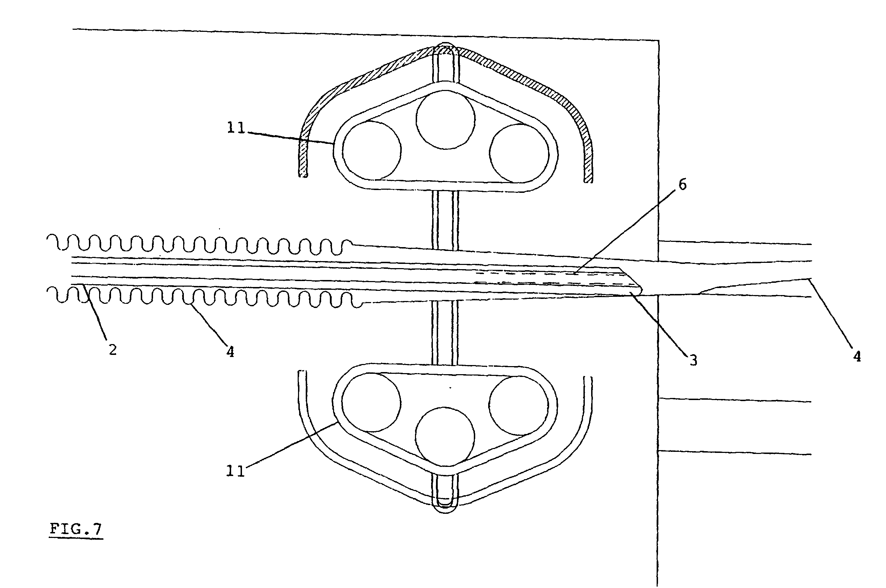

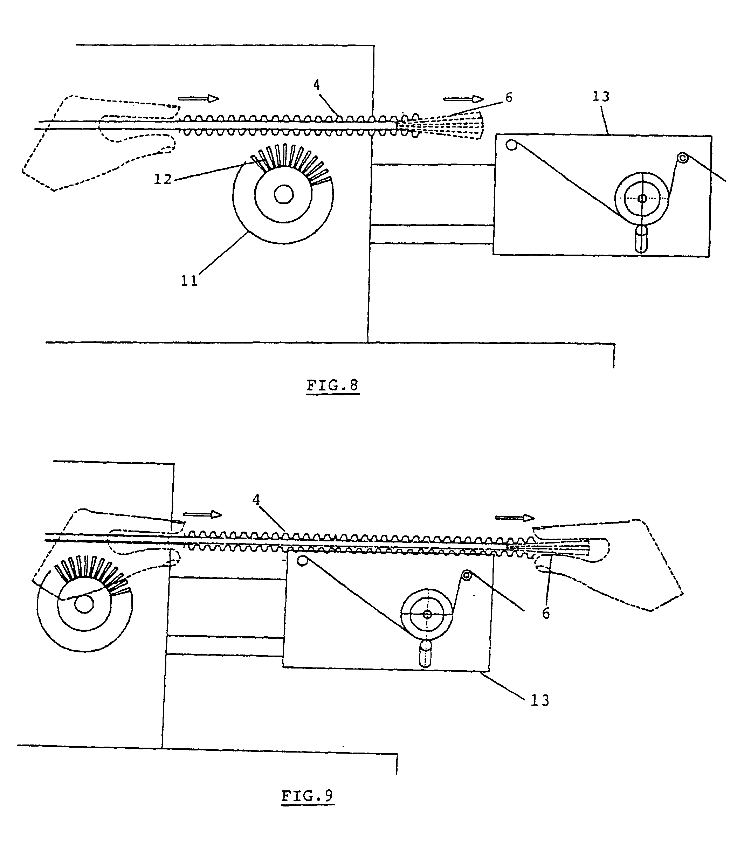

Ces différentes étapes effectuées de manière manuelle sont représentées dans les figures 8 à 10. Dans une première étape, le boyau 4 est enfilé à partir d'une première extrémité 3 du tube creux 2 dans lequel a été introduit le moyen support 6 par l'extrémité 5 opposée du tube creux 2 (figure 7).

Ensuite, en retirant ledit moyen support 6 du tube creux 2 par la première extrémité 3 du tube creux (par laquelle a été enfilé ledit boyau 4) (figure 8), on effectue l'étape de transfert du boyau 4 sur le moyen support 6 (par l'enfilage du boyau sur ledit moyen support) et on recueille avantageusement sur un système transporteur disposé de manière transversale (tapis roulant 36) le moyen support 6 sur lequel a été transféré le boyau 4. Cette opération s'effectue en poussant (de manière manuelle ou par le moyen d'entraînement 27) le boyau 4 de manière à l'enfiler sur le moyen support 6 (figure 9).

Préalablement à l'étape de transfert, on peut effectuer une pression (de préférence manuelle ou par un dispositif mécanique) sur le moyen de fixation et/ou de découpe 10 du moyen support 6. Par cette pression, on détache un tronçon prédécoupé du moyen support 6, de manière à transférer le boyau 4 sur ledit tronçon.

On entend par "moyen support faisant office de gaine" tout type de support en matière plastique, matériau composite et/ou en métal, sur lequel on peut enfiler les boyaux sans risquer de les endommager. Lesdits supports sont, de préférence, réalisés en matière plastique de différentes formes et dimensions qui permettent la pose du boyau sur une canule avant l'étape d'embossage.

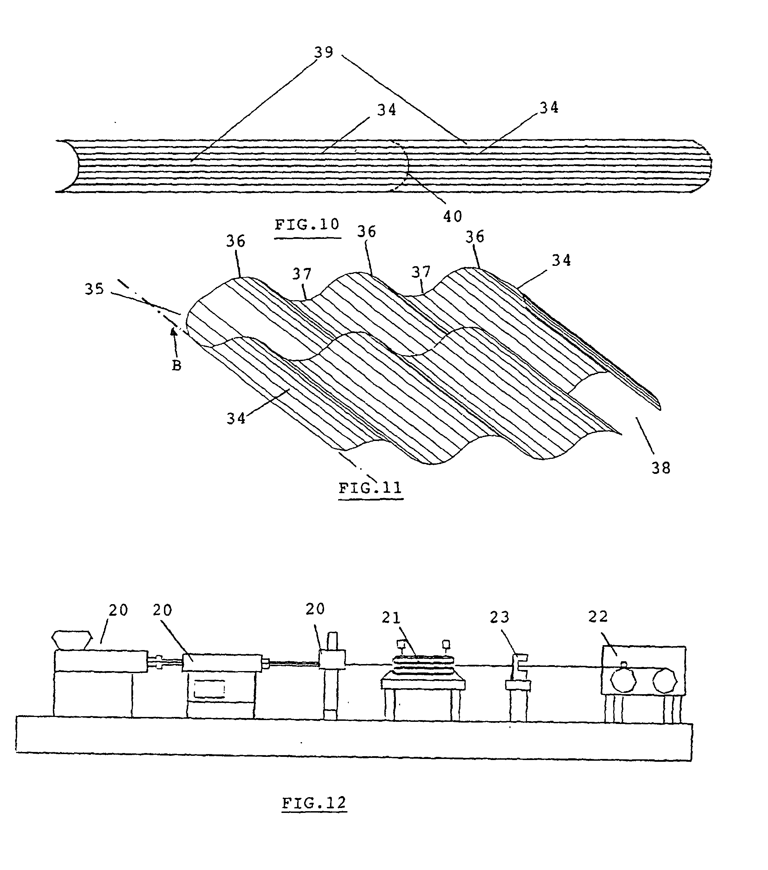

Ainsi que représenté à la figure 10, afin d'effectuer la séparation aisée des différents tronçons 39 du moyen support, on prépare un moyen support qui est constitué de préférence d'une gaine plate en polyéthylène, dont la surface 34 est prédécoupée de manière à former différents tronçons 39 délimités par des prédécoupes 40 en forme de demi-lune, présentant une extrémité convexe et une extrémité concave permettant de distinguer l'avant de l'arrière lors de l'étape d'enfilage du boyau sur ladite gaine.

La figure 11 représente un moyen support selon l'invention constitué par une gaine en matière plastique ayant une forme multi-plissée de type "accordéon". Cette gaine a la forme d'une surface 34 recourbée (pliée) en deux sur elle-même, ladite surface 34 présentant une ondulation parallèle à l'axe B de la courbure (pliure) 35, ladite ondulation étant une succession d'au moins deux sommets 36 et au moins deux creux 37 d'une sinusoïde d'amplitude et de fréquence essentiellement constantes. En outre, le moyen support est une gaine creuse présentant une surface 34 légèrement bombée et une ouverture 38 sur toute sa longueur, ladite ouverture 38 étant parallèle à l'axe B de la courbure 35. Cette ouverture 38 permet avantageusement le retrait de la gaine lors de la pose du boyau sur une canule et le retrait de celle-ci lors de l'étape d'embossage.

Avantageusement, la matière plastique de ladite gaine est choisie de manière à offrir un très bon coefficient de glissement, ce qui permet un retrait facile du boyau.

La figure 12 représente un dispositif pour la production d'un moyen support selon l'invention. Un tel dispositif comprend notamment une extrudeuse 20, une chenille de tirage 21 afin d'incorporer sur une bobineuse 22 le moyen support ainsi obtenu.

Le dispositif peut également comporter un dispositif de prédécoupe 23 (prédécoupage des tronçons).

Selon une forme particulière de l'invention, préalablement à leur enfilage sur le tube creux, les boyaux sont assemblés par un procédé de collage avec une colle alimentaire de type protéique afin d'éviter les pertes de temps pendant la manipulation des morceaux de boyau lors de l'enfilage et pour faciliter le travail. Cette colle peut être composée de Carboxy-Méthyle-Cellulose (CMC) ou d'amidon hydrolysé. Cet amidon est de préférence dilué dans de l'eau chaude (90 °C) et utilisé en concentration élevée (30 à 40% de matière sèche) donnant un effet collant en refroidissant. Un tel produit est, par exemple, celui vendu sous la marque THIBOLA 100® commercialisé par la firme AMYLUM.

La présente invention concerne donc également le boyau constitué de tronçons de boyau dont des portions peuvent éventuellement être superposées. En outre, ce boyau peut être constitué de tronçons de boyau précollés par de l'amidon hydrolysé ou du Carboxy-Méthyle-Cellulose (CMC).

## Revendications

1. Procédé d'enfilage d'un boyau (4) sur un moyen support (6) faisant office de gaine pour le boyau (4), comprenant les étapes suivantes :
- le boyau (4) est enfilé sur une première extrémité (3) d'un tube creux (2) dans lequel a été introduit un moyen support (6) par l'extrémité (5) opposée à la première extrémité (3) dudit tube creux (2),
- tout en retirant ledit moyen support (6) par la première extrémité (3) du tube creux (2), on transfère ledit boyau (4) sur le moyen support (6) et
- on recueille le moyen support (6) sur lequel est transféré le boyau (4),
**caractérisé en ce que** la surface du moyen support (34) forme lors de son introduction, un angle inférieur à 10 degrés par rapport à l'axe (A) du tube creux.

2. Procédé selon la revendication 1, **caractérisé en ce que** la surface du moyen support (6) forme lors de son introduction un angle inférieur à 5° par rapport à l'axe (A) du tube creux (2).

3. Dispositif pour la mise en oeuvre du procédé selon la revendication 1 ou 2, **caractérisé en ce qu'**il comporte, fixé à un châssis (1), un tube creux (2) comportant une première extrémité (3) adaptée pour l'enfilage de boyaux (4) et une seconde extrémité (5) adaptée pour l'introduction d'un moyen support (6) faisant office de gaine pour ledit boyau (4), ladite seconde extrémité (5) du tube creux présentant une ouverture de forme divergente et la première extrémité du tube creux (2) étant adaptée pour permettre que le moyen support (6) soit retiré pour transférer ledit boyau (4) sur ledit moyen support (6).

4. Dispositif selon la revendication 3, **caractérisé en ce que** la première extrémité (3) du tube creux (2) présente une section de forme aplatie et de préférence une découpe en forme de "U" évase sur sa face inférieure (33) et de préférence un moyen de fixation et de découpage (10) du moyen support (6) tel qu'une lame ressort incorporée dans ledit tube creux (2).

5. Dispositif selon la revendication 4, **caractérisé en ce que** la première extrémité (3) du tube creux (2) comporte une pièce de protection (18) ayant la forme d'une buse conique et comportant éventuellement à son extrémité une ouverture (17).

6. Dispositif selon l'une quelconque des revendications précédentes 3 à 5, **caractérisé en ce que** 1a deuxième extrémité (5) du tube creux (2) présente une ouverture de forme conique ou pyramidale.

7. Dispositif selon l'une quelconque des revendications 3 à 6, **caractérisé en ce qu'**il comporte des moyens d'entraînement du boyau sur le tube creux, consistant de préférence en une ou plusieurs roues à chenilles.

8. Procédé selon la revendication 1 ou 2, **caractérisé en ce que** le moyen support (6) faisant office de gaine pour le boyau (4) comporte une surface (34) prédécoupée en tronçons (39) présentant une prédécoupe en forme de demi-lune (40).

9. Procédé selon la revendication 8, **caractérisé en ce que** le moyen support (6) faisant office de gaine pour le boyau (4) présente la forme d'une surface (34) recourbée sur elle-même et présentant une ondulation parallèle à l'axe de la courbure (35), qui est une succession d'au moins deux sommets (36) et d'au moins deux creux (37) d'une sinusoïde d'amplitude et de fréquence essentiellement constantes, dont la surface (34) est légèrement bombée, et comporte une ouverture latérale (38) sur toute sa longueur.

10. Procédé selon la revendication 8 ou 9, **caractérisé en ce qu'**il est constitué de tronçons de boyaux précollés par de l'amidon hydrolysé ou du Carboxy-Méthyle-Cellulose.

## Patentansprüche

1. Verfahren zum Aufziehen eines Darmes (4) auf ein Trägermittel (6), welches als Hülle für den Darm (4) dient, das folgende Schritte umfasst:
- der Darm (4) wird auf ein erstes Ende (3) eines hohlen Rohres (2) aufgezogen, in welches ein Trägermittel (6) durch das Ende (5) eingeführt wird, welch letzteres dem ersten Ende (3) des besagten hohlen Rohres (2) gegenüber liegt,
- während das Trägermittel (6) durch das erste Ende (3) des hohlen Rohres (2) zurückgezogen wird, wird der Darm (4) auf das Trägermittel (6) überführt, und
- das Trägermittel (6), auf welches der Darm (4) überführt worden ist, wird eingesammelt,
**dadurch gekennzeichnet, dass** die Oberfläche des Trägermittels (34) einen Winkel von weniger als 10 Grad gegenüber der Achse (A) des hohlen Rohres bildet, wenn es eingeführt wird.

2. Verfahren gemäss Anspruch 1, **dadurch gekennzeichnet, dass** die Oberfläche des Trägermittels (6) einen Winkel von weniger als 5° gegenüber der Achse (A) des hohlen Rohres (2) bildet, wenn es eingeführt wird.

3. Vorrichtung für die Durchführung des Verfahrens gemäss Anspruch 1 oder 2, **dadurch gekennzeichnet, dass** sie ein an einem Rahmen (1) befestigtes hohles Rohr (2) umfasst, das ein erstes für das Aufziehen eines Darmes (4) geeignetes Ende (3) aufweist und das ein zweites für das Einführen eines Trägermittels (6) geeignetes Ende (5) aufweist, welches als Hülle für den besagten Darm (4) dient, wobei das besagte zweite Ende (5) des hohlen Rohres (2) eine Öffnung mit einer abweichenden Form aufweist und wobei das erste Ende des hohlen Rohres (2) geeignet ist, um es zu ermöglichen, das Trägermittel abzuziehen, um den besagten Darm (4) auf das besagte Trägermittel (6) überzuführen.

4. Vorrichtung gemäss Anspruch 3, **dadurch gekennzeichnet, dass** das erste Ende (3) des hohlen Rohres (2) einen Teil von einer abgeflachten Form aufweist und vorzugsweise einen Zuschnitt in der Form eines auf seiner unteren Seite (33) aufgeweiteten "U" besitzt und vorzugsweise ein Befestigungs- und Schneidmittel (10) für das Trägermittel (6) aufweist, wie etwa ein in das besagte hohle Rohr (2) eingebautes Federblatt.

5. Vorrichtung gemäss Anspruch 4, **dadurch gekennzeichnet, dass** das erste Ende (3) des hohlen Rohres (2) ein Schutzstück (18) mit der Form einer konischen Düse aufweist, das gegebenenfalls an seinem Ende eine Öffnung (17) besitzt.

6. Vorrichtung gemäss irgendeinem der vorhergehenden Ansprüche 3 bis 5, **dadurch gekennzeichnet, dass** das zweite Ende (5) des hohlen Rohres (2) eine Öffnung mit einer konischen oder einer pyramidalen Form aufweist.

7. Vorrichtung gemäss irgendeinem der vorhergehenden Ansprüche 3 bis 6, **dadurch gekennzeichnet, dass** sie Mittel zum Antreiben des Darmes auf das hohle Rohr umfasst, welche vorzugsweise aus einem oder aus mehreren Raupenrädern bestehen.

8. Verfahren gemäss Anspruch 1 oder 2, **dadurch gekennzeichnet, dass** das Trägermittel (6), das als Hülle für den Darm (4) dient, eine Oberfläche (34) aufweist, die in Abschnitte (39) vorgeschnitten ist, die einen Vorschnitt in der Form eines Halbmondes (40) aufweisen.

9. Verfahren gemäss Anspruch 8, **dadurch gekennzeichnet, dass** das Trägermittel (6), das als Hülle für den Darm (4) dient, die Form einer Oberfläche (34) aufweist, die um sich selbst gebogen ist, und die eine zur Krümmungsachse (35) parallele Wellenlinie aufweist, die eine Aufeinanderfolge darstellt von wenigstens zwei Scheitelpunkten (36) und von wenigstens zwei Vertiefungen (37) einer Sinusoide mit einer Amplitude und einer Frequenz, die im wesentlichen konstant sind, und mit einer Oberfläche (34), die leicht ballig ist und eine seitliche Öffnung (38) auf seiner ganzen Länge aufweist.

10. Verfahren gemäss Anspruch 8 oder 9, **dadurch gekennzeichnet, dass** es aus Abschnitten von Därmen besteht, die mit hydrolysierter Stärke oder Carboxy-Methyl-Zellulose vorverleimt sind.

## Claims

1. A method for threading a casing (4) onto a backing means (6) serving as a sheath for the casing (4), comprising the following steps:
■ the casing (4) is threaded onto a first end (3) of a hollow tube (2) in which a backing means (6) has been introduced through the end (5) opposite to the first end (3) of said hollow tube (2),
■ while removing said backing means (6) through the first end (3) of the hollow tube (2), said casing (4) is being transferred onto the backing means (6), and
■ the backing means (6) onto which the casing (4) is transferred is recovered,
**characterized in that** the surface of the backing means (34) forms, upon the introduction thereof, an angle smaller than 10 degrees with respect to the axis (A) of the hollow tube.

2. A method according to claim 1, **characterized in that** the surface of the backing means (6) forms, upon the introduction thereof, an angle smaller than 5 degrees with respect to the axis (A) of the hollow tube (2).

3. A device for implementing the method according to claim 1 or 2, **characterized in that** it comprises, being attached to a frame (1), a hollow tube (2) having a first end (3) adapted for threading casings (4) and a second end (5) adapted for introducing a backing means (6) serving as a sheath for said casing (4), said second end (5) of the hollow tube having a divergent opening and the first end of the hollow tube (2) being adapted for allowing the backing means (6) to be removed so as to transfer said casing (4) onto said backing means (6).

4. A device according to claim 3, **characterized in that** the first end (3) of the hollow tube (2) has a flattened section and preferably a widened "U" shaped cut-out on its lower side (33) and preferably a fastening and cutting-out means (10) of the backing means (6) such as a spring blade incorporated into said hollow tube (2).

5. A device according to claim 4, **characterized in that** the first end (3) of the hollow tube (2) includes a protective part (18) having the shape of a tapered nozzle and optionally comprising at the end thereof an opening (17).

6. A device according to any one of preceding claims 3 to 5, **characterized in that** the second end (5) of the hollow tube (2) has a tapered or pyramid-like opening.

7. A device according to any one of claims 3 to 6, **characterized in that** it includes means for driving the casing on the hollow tube, preferably consisting in one or more caterpillar wheels.

8. A method according to claim 1 or 2, **characterized in that** the backing means (6) serving as a sheath for the casing (4) includes a surface (34) being precut into sections (39) having a half-moon shaped precut-out (40).

9. A method according to claim 8, **characterized in that** the backing means (6) serving as a sheath for the casing (4) has the shape of a surface (34) bent onto itself and showing an undulation parallel to the bending axis (35), which is a succession of at least two peaks (36) and at least two troughs of a sinusoid with essentially constant amplitude and frequency, the surface of which (34) is slightly bulged and includes a side opening (38) along its whole length.

10. A method according to claim 8 or 9, **characterized in that** it includes casing sections preglued with either hydrolyzed starch or carboxymethylcellulose.
